# DEMANDE DE BREVET EUROPEEN

(11) **EP 1 061 453 A1**
(43) Date de publication de la demande: **20.12.2000**
(21) Numéro de dépôt: 00202011.3
(22) Date de dépôt: 07.06.2000
(51) Int. Cl.: G06F 13/42

(54) **Système de transmission et dispositif d'interface entre un système de bus parallèle avec un émetteur récepteur**

(30) Priorité: 15.06.1999 FR 9907563
(71) Demandeur: Koninklijke Philips Electronics N.V., 5621 BA Eindhoven (NL)
(72) Inventeur: de Vries, Maarten, 75008 Paris (FR)
(74) Mandataire: de la Fouchardière, Marie-Noelle

(57) **Abrégé**

L'invention concerne une interface pour connecter un bus de type IEEE1394 avec un système destiné à produire ou recevoir des données en série ou bien sous forme de paquets de bits parallèles. Elle propose un premier circuit pour convertir des données d'entrée en une paire de signaux data et strobe et un deuxième circuit pour réaliser la conversion inverse. Le flux des données d'entrée est séparé en deux flux série déphasés d'une demi période par rapport à une horloge interne pour transmettre en série séparément les bits pairs et les bits impairs. Le débit de chaque flux série correspond à la moitié du débit binaire des données d'entrée reçues. La vitesse de l'horloge interne est donc réduite de moitié par rapport à l'horloge qui synchronise les données d'entrée.

Applications : communications numériques haut débit, télévision numérique.

## Description

L'invention concerne un système de transmission, un récepteur et un émetteur comportant une interface pour convertir des données d'entrée en une paire de signaux comprenant :
- un premier signal (data) pour transmettre lesdites données d'entrée en série sous forme de bits et
- un deuxième signal (strobe) pour effectuer une transition lorsque le premier signal garde la même valeur durant deux bits consécutifs.

Elle concerne également un système de transmission et un émetteur pour transmettre des données à un rythme fourni par une horloge de référence à partir d'une paire de signaux d'entrée de type data et strobe ainsi qu'un récepteur destiné à recevoir une paire de signaux data et strobe.

Elle concerne enfin un dispositif d'interface pour convertir des données d'entrée en une paire de signaux data et strobe ainsi qu'un dispositif d'interface pour convertir une paire de signaux data et strobe en données de sortie formatées en paquets de 2n bits.

Elle a de nombreuses applications dans les systèmes de communication numériques à haut débit et notamment dans les réseaux domotiques IHDN (de l'anglais In Home Digital Network) pour relier des équipements électroniques en utilisant un protocole de communication du type IEEE1394.

La recommandation IEEE1394 décrit un protocole de communication pour convertir des données d'entrée binaires en série en signaux de sortie transmis sur deux fils distincts appelés 〈〈 data 〉〉 et 〈〈 strobe 〉〉 et tel que :
- la fréquence maximale sur chaque fil n'excède pas la moitié de la fréquence d'entrée des données binaires à transmettre et
- le protocole fournit un moyen efficace pour récupérer la fréquence d'horloge de référence des données binaires transmises.

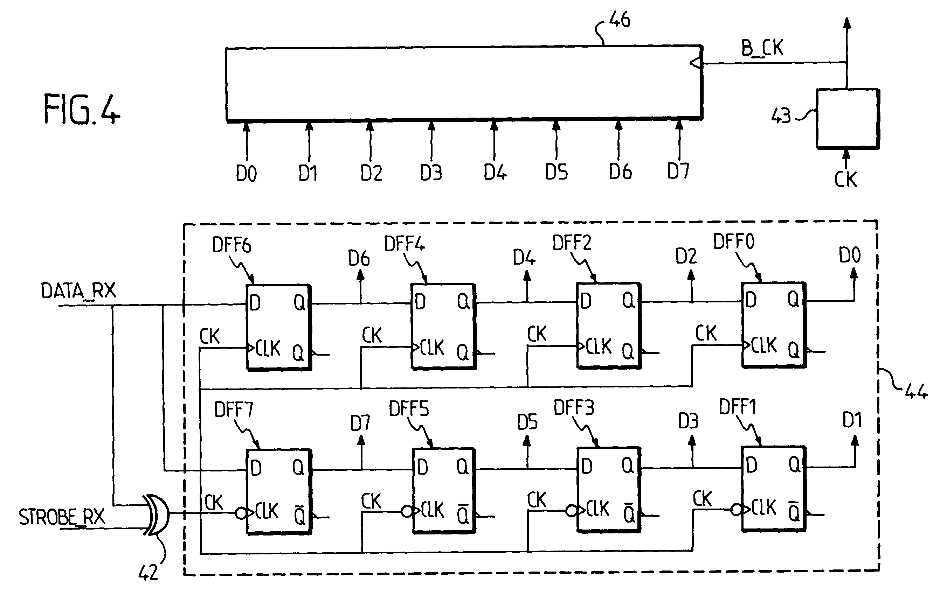

La recommandation IEEE1394 version 1995 décrit au paragraphe 3.7.1 et à la figure 3-18 un circuit de codage pour interfacer une source d'émission de données en série avec une paire de signaux data et strobe servant de couche physique de codage au protocole de communication décrit dans la recommandation, ainsi qu'un circuit de décodage pour réaliser l'opération inverse, c'est-à-dire extraire un flux de données en série à partir d'une paire de signaux data et strobe.

La présente invention a pour objet de fournir une architecture d'interface entre un bus de données et un émetteur / récepteur, dit de type data-strobe (destiné à émettre et / ou recevoir une paire de signaux data et strobe), permettant de réduire la vitesse d'horloge des composants constituant le circuit d'interface et donc de diminuer leur consommation de puissance. Pour cela, il est prévu un système de transmission, un récepteur et un émetteur tels que décrits dans le préambule, remarquables en ce que ladite interface comporte :
- des moyens de décalage pour transmettre séparément les bits pairs et impairs des données d'entrée à l'aide de deux flux série activés sur deux fronts distincts d'une horloge interne,
- des moyens de comparaison pour comparer lesdits bits pairs et impairs consécutifs transmis par lesdits flux série et pour en déduire ledit deuxième signal (strobe) et
- des moyens de recalage temporel coopérant avec lesdits moyens de comparaison pour récupérer les données d'entrée et en déduire ledit premier signal (data).

Ainsi, en séparant le flux des données d'entrée en deux flux binaires distincts déphasés d'une demi période, le débit de chaque flux binaire est alors réduit de moitié par rapport au débit total des données transmises et la vitesse d'horloge des différents composants mis en jeu dans chaque flux est également réduite de moitié, ce qui réduit leur consommation de puissance.

Un mode de réalisation particulièrement avantageux de l'invention est prévu pour convertir un flux d'entrée parallèle, c'est-à-dire contenant des paquets de données, en signaux de sortie data et strobe. Ce mode est intéressant notamment lorsque les données d'entrée sont fournies par un organe de traitement du type processeur de données qui délivre des données formatées en paquets de 2n bits à un rythme fourni par une horloge, dite horloge paquet. Selon ce mode de réalisation, l'interface comporte un circuit de synchronisation d'horloge pour recaler l'horloge paquet avec l'horloge interne, celle ci ayant une fréquence multiple de l'horloge paquet d'un facteur n. La fréquence de l'horloge interne qui détermine la vitesse de fonctionnement des différents composants constituant l'interface est ainsi seulement n fois supérieure à la fréquence de l'horloge paquet qui indique l'arrivée d'un nouveau paquet de données. Or, pour convertir un flux de données parallèles en une paire de signaux data et strobe en appliquant le schéma de la figure 3-18 de la recommandation IEEE1394, une étape de conversion supplémentaire est nécessaire pour convertir le flux parallèle en un flux série. Et cette étape implique que la fréquence de l'horloge interne qui indique l'arrivée d'un nouveau bit est 2×n fois supérieure à la fréquence de l'horloge paquet. L'invention permet ainsi de réduire d'un facteur 2 la fréquence de l'horloge interne dans tout le circuit d'interface entre un émetteur / récepteur de type data-strobe et un bus de données parallèle.

La description suivante, faite en regard des dessins ci-annexés, le tout donné à titre d'exemple non limitatif fera bien comprendre comment l'invention peut être réalisée.
La figure 1 est un schéma bloc représentant un exempte de dispositif d'interface selon l'invention pour convertir des données d'entrée en une paire de signaux data et strobe.
La figure 2 illustre un mode de réalisation du dispositif d'interface représenté à la figure 1.
La figure 3 est un diagramme représentant les différents signaux mis en oeuvre dans le dispositif de la figure 2.
La figure 4 est un schéma bloc représentant un exemple de dispositif d'interface selon l'invention pour convertir une paire de signaux data et strobe en données formatées en paquets de 2n bits.
La figure 5 représente un premier exemple d'application de l'invention.
La figure 6 représente un deuxième exemple d'application de l'invention.
La figure 7 est un schéma pour illustrer un exemple de système selon l'invention comportant un émetteur et un récepteur.

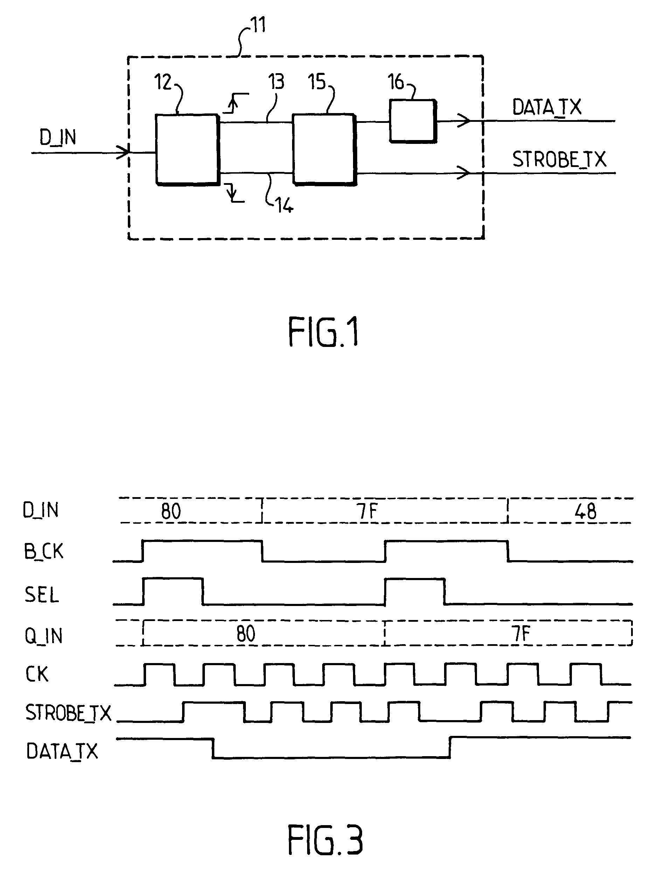

La figure 1 est un schéma bloc simplifié d'une interface 11 pour convertir des données d'entrée notées D_IN en données de sorties délivrées sous la forme d'une paire de signaux DATA_TX et STROBE_TX, de type data et strobe selon la recommandation IEEE1394. Le signal DATA_TX est destiné à transmettre les données d'entrée en série sous forme de bits et le signal STROBE_TX est défini pour effectuer une transition lorsque le signal data garde la même valeur durant deux bits consécutifs. L'interface 11 comporte :
- des moyens de décalage 12 pour transmettre séparément les bits pairs et impairs des données d'entrée en deux flux série 13 et 14 déphasés d'une demi période par rapport à une horloge interne,
- des moyens de comparaison 15 pour comparer deux à deux les bits pairs et impairs consécutifs transmis par les flux série 13 et 14 et pour en déduire le signal STROBE_TX et
- des moyens de recalage temporel 16 placés en sortie des moyens de comparaison 15 pour récupérer les données d'entrée et en déduire le signal DATA_TX.

Le flux des données d'entrée étant séparé en deux flux déphasés d'une demi période pour transmettre en série séparément les bits pairs et les bits impairs des données d'entrée, le débit de chaque flux série correspond à la moitié du débit binaire des données d'entrée reçues. Par conséquent, la vitesse de l'horloge interne qui alimente les moyens 12, 15 et 16 peut être réduite de moitié par rapport à l'horloge qui synchronise les données d'entrée D_IN.

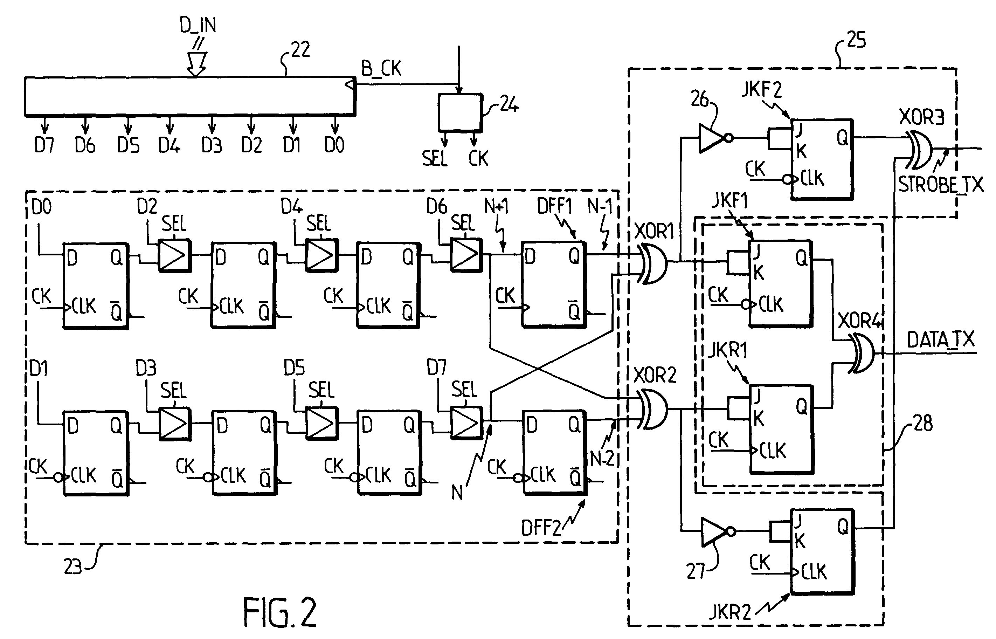

Un mode de réalisation particulier de l'interface 11 représentée à la figure 1 va maintenant être décrit en détails en référence à la figure 2 pour convertir des données d'entrée reçues sous forme de paquets de 2n bits en une paire de signaux data et strobe. Ce mode de réalisation est très intéressant, notamment pour interfacer un support de communication fonctionnant selon le protocole IEEE1394 avec un système de traitement de données de type microprocesseur, appelé système parallèle dans la suite de la description, destiné à recevoir et à produire des données sous forme de paquets de 2n bits parallèles où 2n est en général un multiple de 8. Il permet d'utiliser des composants alimentés à une fréquence d'horloge relativement faible ce qui est économique en terme de consommation de puissance et permet de réduire les coûts d'implémentation à performances égales. Ce mode de réalisation peut notamment être implémenté de façon avantageuse dans un circuit programmable de type FPGA (de l'anglais Field Programmed Gate Array).

Selon ce mode de réalisation, des paquets de 8 bits provenant du système parallèle // sont reçus à un rythme fourni par une horloge B_CK, dite horloge paquet, et stockés dans un registre à 8 bits 22 dont les sorties D0 à D7 sont reliées à des moyens de décalage 23. Un circuit de synchronisation d'horloge 24 permet de recaler l'horloge paquet B_CK avec l'horloge interne CK dont la fréquence est multiple de l'horloge paquet B_CK, d'un facteur n (avec n=4 dans l'exemple de la figure 2). Les moyens de décalage 23 sont constitués de deux cascades de n registres à décalage en série alimentés respectivement avec les n bits pairs et les n bits impairs des données d'entrée à chaque nouvelle période de l'horloge paquet B_CK. Dans l'exemple de la figure 2, chaque cascade est constituée de 4 bascules D (qui recopient en sortie la valeur d'entrée sur un front d'horloge prédéterminé) connectées en série. A chaque nouvelle période de l'horloge paquet B_CK, les bascules de la cascade supérieure sont alimentées respectivement avec les 4 bits pairs disponibles sur D0 D2 D4 et D6, et celles de la cascade inférieure avec les 4 bits impairs sur D1 D3 D5 et D7. Chaque cascade de registres est active sur un front prédéterminé distinct de l'horloge interne CK pour transmettre séparément les bits pairs et impairs sur deux flux déphasés. Des moyens de comparaison 25 coopèrent avec les moyens de décalage 23 pour comparer les bits pairs et impairs consécutifs transmis par chaque cascade de bascules et pour en déduire le signal STROBE_TX. Ils comprennent :
- une paire de comparateurs de type ou exclusif XOR1 et XOR2 : XOR1 pour comparer les bits pairs et impairs consécutifs obtenus respectivement en sortie du dernier registre de la cascade supérieure DFF1 et en entrée du dernier registre de la cascade inférieure DFF2 et de façon symétrique, XOR2 pour comparer les bits pairs et impairs consécutifs respectivement en entrée du dernier registre de la cascade supérieure DFF1 et en sortie du dernier registre de la cascade inférieure DFF2,
- une paire d'inverseurs 26 et 27 pour inverser le signal en sortie des comparateurs XOR1 et XOR2,
- une paire de bascules de type JK configurées en bascules T (c'est-à-dire dont les entrées J et K sont reliées), dont l'une (JKF2) est reliée à la sortie du comparateur XOR1 via l'inverseur 26 et bascule sur le front descendant de l'horloge interne et l'autre (JKR2) est reliée à la sortie du comparateur XOR2 via l'inverseur 27 et bascule sur le front montant.

Des moyens de recalage temporel 28 sont également prévus pour retrouver les données d'entrée et en déduire le signal DATA_TX. Ils comportent une paire de bascules T JKF1 et JKR1 connectées en sortie des comparateurs XOR1 et XOR2 et reliées en entrée d'un comparateur de type ou exclusif XOR4 pour fournir le résultat DATA_TX.

Sur chaque front montant de l'horloge paquet B_CK, les 8 bits stockés dans le registre sont disponibles sur les sorties D0 à D7 pour être envoyés en entrée des 8 bascules D, au signal (SEL) du circuit de synchronisation d'horloge 24. Les bascules de la cascade supérieure reçoivent. les bits pairs et sont activées sur les fronts montants de l'horloge interne dont la fréquence est égale à 4 fois la fréquence de l'horloge paquet B_CK tandis que les bascules inférieures reçoivent les bits impairs et sont activées sur les fronts descendants. Avant le prochain front descendant de l'horloge interne CK, le comparateur XOR1 compare le bit N placé en entrée du dernier registre (DFF2) de la rangée impaire au bit N-1 en sortie du dernier registre (DFF1) de la rangée paire. Si les bits N et N-1 sont différents, cela signifie que le signal d'entrée a subi une transition. Le signai de sortie du comparateur XOR1 vaudra 1 ce qui va provoquer le basculement de JKF1 et par conséquent, une transition sur le signal de sortie DATA_TX déclenchée par la transition de la sortie du comparateur XOR4. La bascule JKF2 conserve la même valeur sur sa sortie grâce à l'inverseur 26 placé à son entrée et donc le signal STROBE_TX reste inchangé. En revanche, si les bits N et N-1 sont identiques, la bascule JKF1 conserve sa valeur de sortie et donc la valeur du signal DATA_TX reste inchangée alors que la sortie de JKF2 bascule, provoquant ainsi une transition sur le signal STROBE_TX. Après le front descendant de l'horloge interne CK, le bit N est disponible en sortie du registre DFF2 pour permettre cette fois au comparateur XOR2 de comparer le bit N au bit N+1 (toujours en entrée de DFF1) afin de mettre à jour la valeur des signaux DATA_TX et STROBE_TX en sortie des comparateurs XOR4 et XOR3 lors du prochain front montant.

Les différents signaux utilisés dans le dispositif de la figure 2 sont représentés sur un diagramme temporel à la figure 3. Il comprend :
- un signal D_IN(0...7) représentant les données du bus 8 bits en entrée du registre 22,
- un signal B_CK représentant le signal de l'horloge paquet,
- un signal SEL représentant le signal de sélection des bits en entrée des bascules D,
- un signal Q_IN(0...7) représentant les données D0 à D7 en sortie du registre 22,
- un signal CK représentant le signal de l'horloge interne,
- le signal DATA_TX et
- le signal STROBE_TX.

Les deux premiers octets seulement (0x80, 0x7F) fournis par le bus parallèle en entrée du registre 8 bits 22 sont représentés sur le diagramme de la figure 3. Conformément à la recommandation IEEE1394, les signaux DATA_TX et STROBE_TX n'ont jamais de transition au même moment et le signal de l'horloge interne CK peut être obtenu par une opération de ou exclusif entre les signaux DATA_TX et STROBE_TX.

La figure 4 est un schéma bloc simplifié d'un dispositif d'interface selon l'invention pour convertir une paire de signaux d'entrée de type data et strobe notés DATA_RX et STROBE_RX en données de sortie formatées en paquets de 2n bits et notées D0 à D2n. Dans l'exemple de la figure 2n = 8. L'interface comprend:
- un comparateur 42 pour comparer les signaux DATA_RX et STROBE_RX et pour obtenir en sortie un signal d'horloge interne CK permettant d'en déduire la fréquence binaire du signal DATA_RX,
- un circuit générateur d'horloge 43 alimenté par l'horloge interne CK pour générer une horloge paquet, dite horloge de référence B_CK à une fréquence sous multiple de l'horloge interne, de facteur 1/n = 0.25,
- des moyens de décalage 44 comportant deux cascades de 4 registres à décalage en série pour recevoir à chaque nouvelle période de l'horloge interne CK respectivement un nouveau bit pair et un nouveau bit impair du signal DATA_RX, chaque cascade étant active sur un front distinct prédéterminé de l'horloge interne CK pour transmettre séparément les bits pairs et impairs sur deux flux série déphasés d'une demi période par rapport à l'horloge interne CK (c'est-à-dire actifs sur un front distinct), et pour délivrer en sortie vers un registre 8 bits 46 les paquets de 8 bits à la fréquence de sortie déterminée par l'horloge paquet B_CK.

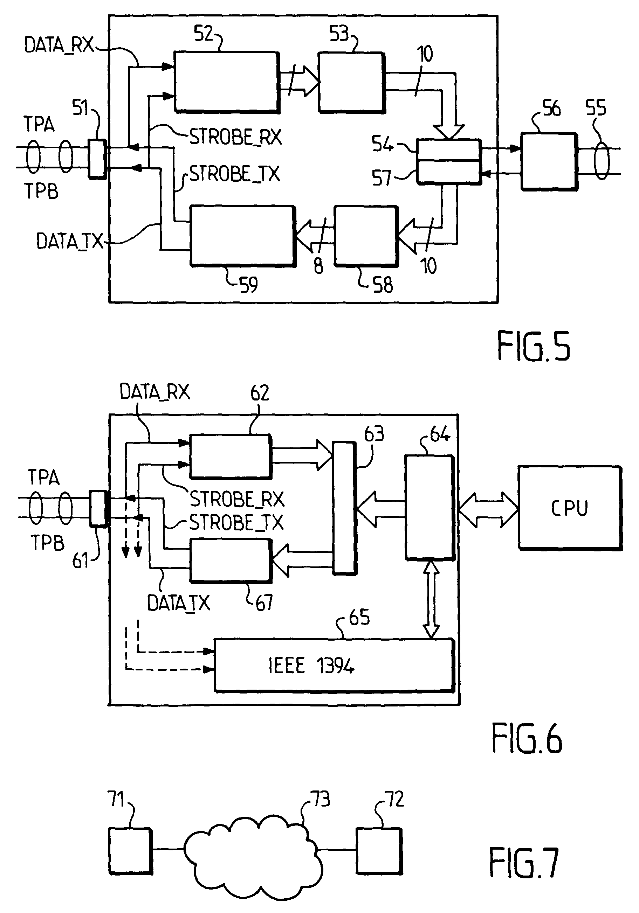

La figure 5 illustre un premier exemple d'application de l'invention. Il s'agit de réaliser un répéteur longue distance pour relier un câble utilisant le standard de communication IEEE1394 à un support de transmission à fibre optique. Les signaux data et strobe transmis par le câble IEEE1394 sont reçus par un port 51 via la paire TPA et TPB selon la norme IEEE1394. Les signaux DATA_RX et STROBE_RX sont ensuite convertis en un flux d'octets à l'aide d'un dispositif interface 52, par exemple du type de celui représenté à la figure 4. Le flux d'octets est alors codé par un codeur 53 (par exemple de type 8B/10B ou 4B/5B) destiné à remplacer le paquet de 8 bits parallèles reçu du dispositif 52 par un paquet de 10 bits permettant par la suite au récepteur situé à l'autre extrémité de la fibre optique de récupérer l'horloge du système. Le paquet de 10 bits est ensuite sérialisé (54) pour être envoyé sur la fibre optique 55 à l'aide d'un émetteur / récepteur approprié 56. En sens inverse, le trafic de données provenant de la fibre optique est dé-sérialisé (57) avant de subir un décodage 8B/10B (58) pour être ensuite converti en une paire de signaux DATA_TX et STROBE_TX à destination du câble IEEE1394 à l'aide d'un dispositif d'interface 59, par exemple du type de celui représenté à la figure 2.

La figure 6 illustre un deuxième exemple d'application de l'invention pour implémenter une interface entre la couche physique du bus IEEE1394 et un système hôte de traitement de données CPU. L'interface peut être implémentée dans un circuit programmable à faible coût dont la fréquence d'horloge de chaque composant ne dépasse pas N/2 MHz (où N est le débit binaire des données transmises sur le bus IEEE1394 et vaut en général 100, 200 ou 400 Mbits/s). Les signaux data et strobe sont reçus via un port spécifique 61 selon la recommandation IEEE1394. Dans l'exemple de la figure 6 le circuit ne comporte qu'un seul port mais il peut en comporter plusieurs en fonction des besoins de l'application. Le circuit d'interface comporte un dispositif 62 du type de celui représenté à la figure 4 pour convertir la paire de signaux DATA_RX et STROBE_RX en un flux de données formatées en paquets d'octets et transmises via un bus parallèle 63 vers une interface 64 du système de traitement de données CPU, contrôlée par un organe de contrôle 65 qui reçoit, entre autres, les signaux DATA_RX et STROBE_RX. Il comporte également un dispositif d'interface 67 du type de celui représenté à la figure 2 pour convertir le flux parallèle de données formatées en paquets d'octets en une paire de signaux DATA_TX et STROBE_TX vers le port IEEE1394 61.

Un schéma général d'un système de transmission selon l'invention est représenté à la figure 7. Il comporte un émetteur 71, un récepteur 72 et un canal de transmission 73 utilisant par exemple une liaison par fibre optique, par paire torsadée ou tout autre medium câblé. L'émetteur ou le récepteur peuvent notamment comporter des dispositifs d'interface du type de ceux représentés aux figures 2 et 4 ou du type de celui de la figure 6 pour interfacer un système parallèle, par exemple un organe de traitement de données à base de microprocesseur, et un bus IEEE1394. Dans le cas d'une liaison optique entre un émetteur et un récepteur, le système peut également être constitué d'un émetteur et d'un récepteur connectés à l'aide d'un câble IEEE1394. Dans ce cas, le canal de transmission 73 peut être constitué par deux câbles IEEE1394, l'un connecté à l'émetteur 71, l'autre au récepteur 72 et reliés entre eux via une liaison optique connectée à chacun des câbles IEEE1394 par deux répéteurs du type de celui représenté à la figure 5.

## Revendications

1. Récepteur comportant une interface pour convertir des données d'entrée en une paire de signaux comprenant :
- un premier signal (data) pour transmettre lesdites données d'entrée en série sous forme de bits et
- un deuxième signal (strobe) pour effectuer une transition lorsque le premier signal garde la même valeur durant deux bits consécutifs, **caractérisé en ce que** ladite interface comporte:
- des moyens de décalage pour transmettre séparément les bits pairs et impairs des données d'entrée à l'aide de deux flux série activés sur deux fronts distincts prédéterminés d'une horloge interne,
- des moyens de comparaison pour comparer lesdits bits pairs et impairs consécutifs transmis par lesdits flux série et pour en déduire ledit deuxième signal et
- des moyens de recalage temporel coopérant avec lesdits moyens de comparaison pour récupérer les données d'entrée et en déduire ledit premier signal.

2. Récepteur selon la revendication 1, caractérisé en ce que lesdites données d'entrée sont formatées en paquets de 2n bits reçus à un rythme fourni par une horloge, dite horloge paquet, et en ce que ladite interface comporte un circuit de synchronisation d'horloge pour recaler l'horloge paquet avec l'horloge interne, celle ci ayant une fréquence multiple de l'horloge paquet d'un facteur n.

3. Récepteur destiné à recevoir une paire de signaux comprenant un premier signal (data) pour transmettre des données binaires en série et un deuxième signal (strobe) pour effectuer une transition lorsque le premier signal garde une même valeur durant deux données binaires consécutives,
**caractérisé en ce qu'il** comporte une interface pour convertir lesdits premier et deuxième signaux en données de sortie formatées en paquets de 2n bits, comprenant:
- un comparateur pour recevoir lesdits premier et deuxième signaux et pour obtenir en sortie un signal d'horloge interne,
- un circuit générateur d'horloge alimenté par ladite horloge interne pour générer une horloge de référence dite horloge paquet à une fréquence sous multiple de l'horloge interne, de facteur 1/n,
- des moyens de décalage destinés à recevoir ledit premier signal pour transmettre séparément les bits pairs et impairs sur deux flux série activés sur deux fronts distincts de l'horloge interne et pour délivrer lesdits paquets de 2n bits à chaque nouvelle période de l'horloge paquet.

4. Emetteur comportant une interface pour convertir des données d'entrée en une paire de signaux comprenant :
- un premier signal (data) pour transmettre lesdites données d'entrée en série sous forme de bits et
- un deuxième signal (strobe) pour effectuer une transition lorsque le premier signal garde la même valeur durant deux bits consécutifs,
**caractérisé en ce que** ladite interface comporte :
- des moyens de décalage pour transmettre séparément les bits pairs et impairs des données d'entrée à l'aide de deux flux série activés sur deux fronts distincts d'une horloge interne,
- des moyens de comparaison pour comparer lesdits bits pairs et impairs consécutifs transmis par lesdits flux série et pour en déduire ledit deuxième signal et
- des moyens de recalage temporel coopérant avec lesdits moyens de comparaison pour récupérer les données d'entrée et en déduire ledit premier signal.

5. Emetteur destiné à émettre des données à un rythme fourni par une horloge de référence à partir d'une paire de signaux comprenant :
- un premier signal (data) pour transmettre des bits en série à un rythme fourni par une horloge interne et
- un deuxième signal (strobe) pour effectuer une transition lorsque le premier signal garde la même valeur durant deux bits consécutifs,
**caractérisé en ce qu'il** comporte une interface pour convertir lesdits signaux en données de sortie formatées en paquets de 2n bits, comprenant :
- un comparateur pour recevoir lesdits premier et deuxième signaux et pour obtenir en sortie un signal d'horloge interne,
- un circuit générateur d'horloge alimenté par ladite horloge interne pour générer une horloge de référence à une fréquence sous multiple de l'horloge interne, de facteur 1/n,
- des moyens de décalage destinés à recevoir ledit premier signal pour transmettre séparément les bits pairs et impairs sur deux flux série activés sur deux fronts distincts de l'horloge interne et pour délivrer lesdits paquets de 2n bits à chaque nouvelle période de l'horloge de référence.

6. Dispositif d'interface pour convertir des données d'entrée en une paire de signaux comprenant :
- un premier signal (data) pour transmettre lesdites données d'entrée en série sous forme de bits et
- un deuxième signal (strobe) pour effectuer une transition lorsque le premier signal garde la même valeur durant deux bits consécutifs,
**caractérisé en ce que** ladite interface comporte :
- des moyens de décalage pour transmettre séparément les bits pairs et impairs des données d'entrée à l'aide de deux flux série activés sur deux fronts distincts d'une horloge interne,
- des moyens de comparaison pour comparer lesdits bits pairs et impairs consécutifs transmis par lesdits flux série et pour en déduire ledit deuxième signal et
- des moyens de recalage temporel coopérant avec lesdits moyens de comparaison pour récupérer les données d'entrée et en déduire ledit premier signal.

7. Dispositif d'interface pour convertir une paire de signaux en données de sortie formatées en paquets de 2n bits, ladite paire comprenant :
- un premier signal (data) pour transmettre des bits en série à un rythme fourni par une horloge interne et
- un deuxième signal (strobe) pour effectuer une transition lorsque le premier signal garde la même valeur durant deux bits consécutifs,
**caractérisé en ce qu'il** comporte :
- un comparateur pour recevoir lesdits premier et deuxième signaux et pour obtenir en sortie un signal d'horloge interne,
- un circuit générateur d'horloge alimenté par ladite horloge interne pour générer une horloge de référence à une fréquence sous multiple de l'horloge interne, de facteur 1/n,
- des moyens de décalage destinés à recevoir ledit premier signal pour transmettre séparément les bits pairs et impairs sur deux flux série activés sur deux fronts distincts de l'horloge interne et pour délivrer lesdits paquets de 2n bits à chaque nouvelle période de l'horloge de référence.

8. Système de transmission comportant une interface pour convertir des données d'entrée en une paire de signaux comprenant :
- un premier signal (data) pour transmettre lesdites données d'entrée en série sous forme de bits et
- un deuxième signal (strobe) pour effectuer une transition lorsque le premier signal garde la même valeur durant deux bits consécutifs,
**caractérisé en ce que** ladite interface comporte :
- des moyens de décalage pour transmettre séparément les bits pairs et impairs des données d'entrée à l'aide de deux flux série activés sur deux fronts distincts d'une horloge interne,
- des moyens de comparaison pour comparer lesdits bits pairs et impairs consécutifs transmis par lesdits flux série et pour en déduire ledit deuxième signal et
- des moyens de recalage temporel coopérant avec lesdits moyens de comparaison pour récupérer les données d'entrée et en déduire ledit premier signal.

9. Système de transmission pour transmettre des données à un rythme fourni par une horloge de référence à partir d'une paire de signaux comprenant :
- un premier signal (data) pour transmettre des bits en série à un rythme fourni par une horloge interne et
- un deuxième signal (strobe) pour effectuer une transition lorsque le premier signal garde la même valeur durant deux bits consécutifs,
**caractérisé en ce qu'il** comporte une interface pour convertir lesdits signaux en données de sortie formatées en paquets de 2n bits, comprenant :
- un comparateur pour recevoir lesdits premier et deuxième signaux et pour obtenir en sortie un signal d'horloge interne,
- un circuit générateur d'horloge alimenté par ladite horloge interne pour générer une horloge de référence à une fréquence sous multiple de l'horloge interne, de facteur 1/n,
- des moyens de décalage destinés à recevoir ledit premier signal pour transmettre séparément les bits pairs et impairs sur deux flux série activés sur deux fronts distincts de l'horloge interne et pour délivrer lesdits paquets de 2n bits à chaque nouvelle période de l'horloge de référence.
